# EUROPÄISCHE PATENTANMELDUNG

(11) **EP 3 173 840 A1**
(43) Veröffentlichungstag der Anmeldung: **31.05.2017**
(21) Anmeldenummer: 17151258.5
(22) Anmeldetag: 30.07.2007
(51) Int. Cl.: G02B 23/14, G02B 27/34

(54) **ZIELFERNROHR**

(30) Priorität: 01.08.2006 DE 102006035777
(62) Teilanmeldung aus: 07801193.9
(71) Anmelder: Swarovski-Optik KG., 6067 Absam (AT)
(72) Erfinder: KAUFMANN, Gerhard, 71083 Herrenberg (DE)
(74) Vertreter: Burger, Hannes

(57) **Zusammenfassung**

Zielfernrohr mit mindestens einer im optischen Strahlengang liegenden Bildebene, wobei in der Bildebene eine Absehensstruktur angeordnet ist, die aus einem in die Bildebene projizierten virtuellen Abbild (18) eines außerhalb des Strahlengangs angeordneten Absehens (20) besteht, wobei der Bildebene ein Strahlenteiler (26) zugeordnet ist, auf den von einer mindestens ein Absehen (20) und eine Projektionseinrichtung (22) aufweisenden Displayeinheit (22, 28) das Abbild (18) des Absehens (20) projizierbar ist, und die Displayeinheit (22, 28) eine Variationseinrichtung mit einen elektronischen Rechner zum Verändern des auf den Strahlenteiler (26) projizierten Absehensabbilds (20) aufweist, wobei mit dem Rechner ein Winkelmessgerät gekoppelt ist, sodass das für den Schützen im Zielfernrohr erkennbare Absehensabbild (18) in Bezug auf das Ziel bei Schüssen nach oben oder unten durch den Rechner korrigierbar ist.

## Beschreibung

Die Erfindung betrifft ein Zielfernrohr, insbesondere für eine Handfeuerwaffe, mit einem in einem im wesentlichen langgestreckten, vorzugsweise kreisrunden Querschnitt aufweisenden, an die Handfeuerwaffe oder dergleichen anbringbaren Außenrohr integrierten optischen Linsensystem, welches an einem dem Auge des Schützen im Gebrauch der Waffe zugewandten Stirnende durch ein Okular und an seinem gegenüberliegenden Stirnende durch ein Objektiv abgeschlossen ist und zwischen dem Okular und dem Objektiv mindestens eine im optischen Strahlengang von das Okular und das Objektiv durchsetzenden Lichtstrahlen liegende Bildebene aufweist, wobei in der bzw. mindestens einer der Bildebenen eine im Strahlengang liegende Absehensstruktur angeordnet ist.

Bei Zielfernrohren bekannter Art werden die Absehen "physisch" in einer Bildebene plaziert, um Mess- oder Zielaufgaben zu erfüllen. Die dabei verwendeten Absehen bestehen beim Stand der Technik entweder aus geätzten Glasplatten, welche die Darstellung komplexer Strukturen erlauben, oder aber aus feinen Drähten, die keine komplexen Strukturen zulassen. Da Absehen in einer Bildebene eines Zielfernrohres stehen, werden sie üblicherweise durch den Schützen unter hoher Vergrößerung betrachtet und sind deshalb besonders anfällig für die Sichtbarkeit von Verschmutzung und Defekten.

Bei den bekannten Zielfernrohren bedeutet das Wechseln eines Absehens, z. B. im Fall von Verschmutzung bzw. im Fall eines Defektes, einen aufwendigen Eingriff und kann nur von speziell dafür ausgebildeten Fachkräften in einer entsprechend ausgestatteten Werkstätte durchgeführt werden. Da der Markt durch individuelle Bevorzugung eine hohe Zahl verschiedener Absehen und damit von Zielfernrohren verlangt, ist die Lagerhaltung für den Hersteller wie auch für den Fachhändler ein kostspieliges logistisches Problem, wobei der Unterschied zwischen den vielen Zielfernrohrtypen nur in einem einzigen, kleinen, jedoch kompliziert zu ersetzenden Bauteil, nämlich dem Absehen, besteht.

Der Erfindung liegt die Aufgabe zugrunde, ein Zielfernrohr der gattungsgemäßen Art zu schaffen, bei dem ein Auswechseln des Absehens, vorzugsweise auch eine Variation desselben, in vereinfachter Weise ausgeführt werden kann.

Erfindungsgemäß wird diese Aufgabe in Weiterbildung des gattungsgemäßen Zielfernrohrs dadurch gelöst, daß die Absehensstruktur aus einem in die (jeweilige) Bildebene projizierten virtuellen Abbild eines außerhalb des Strahlengangs angeordneten Absehens besteht.

Dabei kann vorgesehen sein, daß der (jeweiligen) Bildebene ein Strahlenteiler zugeordnet ist, der von den das Okular und das Objektiv durchsetzenden Lichtstrahlen durchsetzt ist und auf den von einer außerhalb des Außenrohres angeordneten, mindestens ein Absehen und eine Projektionseinrichtung aufweisenden Displayeinheit das Abbild das (jeweiligen) Absehens projizierbar ist.

Die Erfindung sieht gegebenenfalls auch vor, daß das Außenrohr im Strahlengang zwischen der Displayeinheit und dem Strahlenteiler eine durch ein lichtdurchlässiges, staub- und wasserdichtes Fenster verschlossene Projektionsöffnung aufweist.

Dabei kann auch vorgesehen sein, daß der Strahlenteiler ein optisch halbdurchlässiges Prisma aufweist.

Eine weitere Ausführungsform der Erfindung ist dadurch gekennzeichnet, daß die Displayeinheit einen Speicher mit einer Vielzahl von Absehen sowie eine Auswahleinrichtung zum wahlweisen Projizieren mindestens eines der Absehen auf den/die Strahlenteiler aufweist.

Die Erfindung sieht gegebenenfalls weiterhin vor, daß die Auswahleinrichtung und/oder der Speicher elektronisch ausgebildet ist/sind.

Nach der Erfindung kann auch vorgesehen sein, daß die Displayeinheit eine Variationseinrichtung zum Verändern des auf den Strahlenteiler projizierten Absehensabbilds aufweist.

Eine besondere Weiterbildung dieser Ausführungsform sieht vor, daß die Variationseinrichtung elektronisch ausgebildet ist.

Auch kann vorgesehen sein, daß die Variationseinrichtung zur Nullpunktjustierung des Zielfernrohres eingerichtet ist.

Dabei kann vorgesehen sein, daß die Variationseinrichtung einen elektronischen Rechner in Verbindung mit einem elektronischen Absehensspeicher und einem hochauflösenden Graphikmodul aufweist.

Die Erfindung sieht gegebenenfalls auch vor, daß die Variationseinrichtung mittels einer am Zielfernrohr oder an der Waffe angeordneten Tasteneinrichtung direkt oder über Fernbedienung betätigbar ist.

Dabei kann auch vorgesehen sein, daß in die Variationseinrichtung beim Einschießen mittels der Tasteneinrichtung die Ballistik eines aus der Waffe zu verschießenden Geschosses bestimmende Werte, wie Munitionsparameter, eingebbar sind.

Eine weitere Ausführungsform der Erfindung ist dadurch gekennzeichnet, daß mit der Variationseinrichtung ein Zielentfernungsmesser gekoppelt ist.

Die Erfindung sieht gegebenenfalls weiterhin vor, daß der Rechner der Variationseinrichtung mit einer am Zielfernrohr befindlichen Einrichtung zur Parallaxenkorrektur gekoppelt ist.

Nach der Erfindung kann auch vorgesehen sein, daß der Rechner der Variationseinrichtung mit einem Luftdruckmesser gekoppelt ist.

Eine besondere Weiterbildung dieser Ausführungsform sieht vor, daß mit dem Rechner der Variationseinrichtung ein Winkelmessgerät gekoppelt ist, welches im wesentlichen sämtliche Neigungsbewegungen des Zielfernrohrs registriert und seine Daten an den Rechner liefert.

Auch kann vorgesehen sein, daß seitliche Neigungsbewegungen der aus Waffe und Zielfernrohr bestehenden Einheit dem Schützen über die Displayeinrichtung unter Angabe der Korrektionsrichtung anzeigbar sind.

Dabei kann vorgesehen sein, daß das Absehensabbild in bezug auf die durch Seitenneigung verursachte Abweichung der Geschossflugbahn direkt über den Rechner korrigierbar ist.

Schließlich sieht eine Ausführungsform der Erfindung auch vor, dass das für den Schützen im Zielfernrohr erkennbare Absehensabbild in bezug auf das Ziel durch den Rechner bei Schüssen nach oben oder unten durch den Rechner korrigierbar ist.

Der Erfindung liegt die überraschende Erkenntnis zugrunde, daß es gelingt, die bei den bekannten Zielfernrohren infolge der "physischen" Struktur des im Strahlengang angeordneten Absehens hervorgerufenen Probleme dadurch zu lösen, daß statt eines in einer Bildebene des Zielfernrohres vorhandenen tatsächlichen Absehens dort lediglich das Abbild des außerhalb des Strahlenganges bzw. des Außenrohres des Zielfernrohres befindlichen "eigentlichen" Absehens angeordnet wird. Dies bedeutet, daß sich das eigentliche Absehen nicht innerhalb des optischen Strahlenganges des Zielfernrohres befindet, sondern außerhalb liegt und lediglich durch ein optisches Projektionssystem in die Bildebene des Zielfernrohres hineinprojiziert wird.

Der Vorteil gegenüber dem Stand der Technik besteht darin, daß der Benutzer und damit der Kunde selbst in der Lage ist, das Absehen auszutauschen. Dies kann durch Wechsel der gesamten Displayeinheit geschehen. Es kann aber auch vorgesehen sein, daß eine entsprechende Anzahl von Absehen elektronisch gespeichert ist, wobei dann eine Auswahl dieser Absehen mittels eines Tasten- oder elektronischen Bedienfeldes erfolgen kann.

Das trennende Glasfenster zwischen Projektionseinheit und Zielfernrohroptik ist wasser- und staubdicht ausgeführt. So kann weder Feuchtigkeit noch Staub in das optische System des Zielfernrohes eindringen. Da das Absehen bei Bedarf leicht gereinigt oder ersetzt werden kann, ist der Serviceaufwand durch den Hersteller beziehungsweise Servicebetrieb erheblich reduziert. Die Typenvielfalt der Zielfernrohre kann wesentlich erhöht werden. Die logistischen Kosten für den Hersteller und den Fachhändler werden dadurch erheblich verringert.

Bei einem Zielfernrohr nach der Erfindung kann die Nullpunktjustierung durch Verstellung des das Umkehrsystem enthaltenden Rohres entfallen und durch eine einfache Verschiebung des außerhalb des Außenrohres liegenden Absehens selbst, eines der Spiegel oder aber des Projektionslinsensystems erfolgen. Die konventionellen Höhen - und Seitenverstelltürme sind nicht mehr erforderlich, wodurch auch die Montagemöglichkeiten des erfindungsgemäßen Zielfernrohres auf der Waffe erheblich verbessert werden.

Wenn das Bild des Absehens durch ein hochauflösendes Graphikmodul in Verbindung mit einem Rechner und einem Speicher erzeugt sind, können sämtliche erforderlichen Adjustierungen einschließlich des Einschießens der Waffe über dieses Modul vorgenommen werden. Hierzu sind keinerlei mechanische Einstellungen, wie bisher die Verschiebung des Linsenumkehrsystems, erforderlich.

Wenn das Bild des Absehens durch ein hochauflösendes Graphikmodul in Verbindung mit einem Rechner oder einem Speicher erzeugt wird, können sämtliche gespeicherten Formen und Farben von Absehen nach den Einsatzerfordernissen des Schützen aufgerufen oder gar durch den Schützen selbst nach individuellen Wünschen konzipiert und realisiert werden.

Durch das Graphikmodul dargestellte, gegebenenfalls beispielsweise auch beleuchtete, Absehenskomponenten können bei jedem Visiervorgang zugeschaltet werden. Dies kann über eine Taste am Zielfernrohr selbst oder aber über eine durch Kabel oder z. B. Bluetooth-Verbindung mit dem Zielfernrohr kommunizierende Taste erfolgen. Diese liegt vorzugsweise ergonomisch günstig auf der Waffe, bevorzugt am Kolbenhals oder außen am hinteren, dem Schützen zugewandten Teil des Abzugsbügels. Wird die Taste außen am hinteren Teil des Abzugsbügels angebracht, so kann sie bequem durch die Schießhand des Schützen betätigt werden.

Während des Einschießens werden vorzugsweise mittels des am Zielfernrohr befindlichen Tasten- bzw. Bedienfeldes oder einer über Bluetooth-Verbindung mit dem Zielfernrohr kommunizierenden Eingabe-Displayeinheit diejenigen Parameter der zu verschießenden Munition eingegeben, welche die externe Flugbahn (Ballistik) des Geschosses bestimmen.

Jeweils unmittelbar vor der Schussabgabe lässt sich die Schussentfernung bevorzugt entweder manuell durch das am Zielfernrohr vorhandene Tasten- bzw. Bedienfeld oder durch einen internen oder externen Laserentfernungsmesser mittels z. B. einer Bluetooth-Verbindung eingegeben. Der Rechner berechnet und korrigiert anhand dieser Angaben unter Abgleich der eingegebenen Daten das Bild des Absehens in Bezug auf das Ziel.

Eine am Zielfernrohr befindliche Einrichtung zur Parallaxenkorrektur ist vorzugsweise mit dem Rechner gekoppelt. Der Rechner ist dadurch in der Lage, die eingestellte Entfernung mit der Korrektur der Ballistik zu korrelieren.

Optional kann das Zielfernrohr durch ein minitaturisiertes Luftdruckmessgerät ergänzt werden, welches seine Daten an den Rechner der Displayeinheit liefert, der demzufolge das Bild des Absehens luftdruckabhängig in bezug auf das Ziel korrigieren kann.

Das Zielfernrohr kann mit einem Winkelmessgerät kombiniert sein, welches sämtliche Neigungsbewegungen des Zielfernrohres registriert und seine Daten an den Rechner liefert. Sämtliche Neigungsbewegungen, das sogenannte Verkanten der aus Waffe und Zielfernrohr bestehenden Einheit, können dem Schützen über das Display sofort unter Angabe der Korrektionsrichtung angezeigt werden. Alternativ hierzu kann das Absehen auch in bezug auf die durch Seitenneigung verursachte Abweichung der Geschoßflugbahn direkt über den Rechner korrigiert werden. Bei Schüssen nach oben oder unten wird die Absehenslage in bezug auf das Ziel vorzugsweise grundsätzlich durch den Rechner korrigiert.

Weitere Merkmale und Vorteile der Erfindung ergeben sich aus der nachstehenden Beschreibung, in der Ausführungsbeispiele anhand der schematischen Zeichnungen im einzelnen erläutert sind.

Dabei zeigt:
- Fig. 1: ein erstes Ausführungsbeispiel eines terrestrischen Zielfernrohres nach der Erfindung im schematischen Längsschnitt durch die optische Achse;
- Fig. 2: in Fig. 1 entsprechender Darstellung zweites Ausführungsbeispiel eines Zielfernrohres nach der Erfindung;
- Fig. 3: in Fig. 1, und 2 entsprechender Darstellung ein drittes Ausführungsbeispiel eines Zielfernrohres nach der Erfindung; und
- Fig. 4: in Fig. 1-3 entsprechender Darstellung ein weiteres Ausführungsbeispiel eines Zielfernrohres nach der Erfindung.

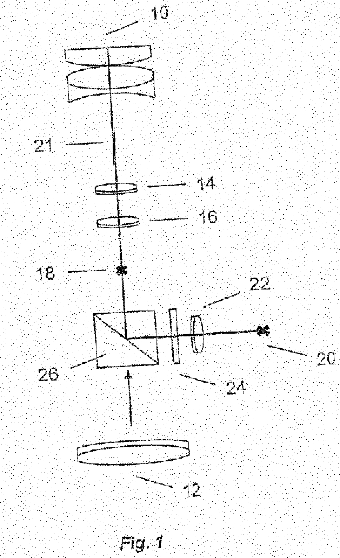

Bei dem in Fig. 1 gezeigten terrestrischen Zielfernrohr, bei dem ein Okular 10 und ein Objektiv 12 ein nicht gezeigtes Außenrohr, welches in Fig. 1 von oben nach unten verläuft, stirnseitig abschließen, definieren das Okular 10 und das Objektiv 12 im Zusammenhang mit einem Linsen 14, 16 aufweisenden Linsensystem eine erste Bildebene, in der ein Abbild 18 eines kreuzförmig dargestellten Absehens angeordnet ist. Ein eigentliches Absehen 20 befindet sich außerhalb des nicht gezeigten Außenrohres und des durch das Okular 10, das Objektiv 12 und die Linsen 14, 16 definierten optischen Strahlenganges 21 der Zieloptik und wird über ein Projektionslinsensystem 22 über ein Glasfenster 24, welches staub- und wasserdicht ausgeführt ist, auf einen durch ein halbdurchlässiges Prismensystem gebildeten Strahlenteiler 26 projiziert, der das Abbild 18 des Absehens 20 im wesentlichen zentral in der ersten Bildebene der Zielfernrohroptik erzeugt. Das Absehen 20, an dessen Stelle auch eine Speichereinheit, insbesondere elektronischer Art, für eine Anzahl von Absehen vorgesehen sein kann, bildet zusammen mit dem Projektionslinsensystem 22 eine außerhalb des Außenrohres des Zielfernrohres angeordnete Displayeinheit, welche z. B. auch von dem Zielfernrohr abnehmbar sein kann.

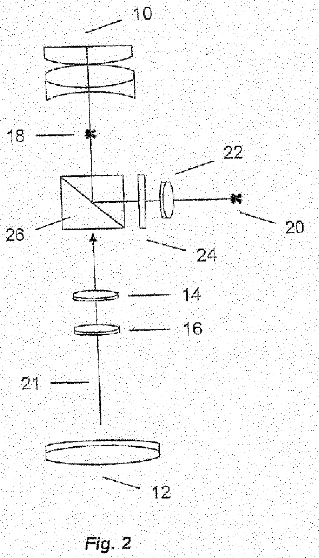

Beim Ausführungsbeispiel von Fig. 2 ist das Abbild 18 des Absehens 20 in eine zweite Bildebene der Zielfernrohroptik projiziert, während das Abbild 18, wie oben ausgeführt, beim Ausführungsbeispiel von Fig. 1 in der ersten Bildebene der Zieloptik liegt.

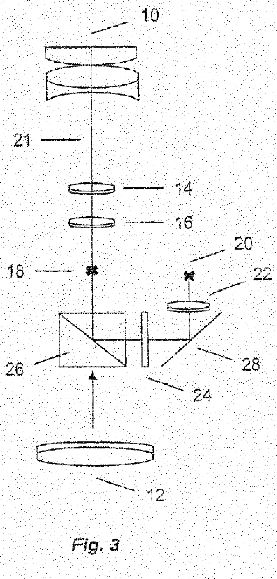

In Fig. 3 ist ein weiteres Ausführungsbeispiel des Zielfernrohres nach der Erfindung gezeigt, bei dem das Absehen 20 durch das Projektionslinsensystem 22 zunächst auf einen Spiegel 28 projiziert wird, von dem der weitere Strahlengang des Absehensabbildes dann durch das Glasfenster 24 und den Strahlenteiler 26 bis zum Abbild 18 des beim Ausführungsbeispiel von Fig. 3 in der ersten Bildebene angeordneten Abbildes 18 verläuft. Statt des in der Zeichnung gezeigten einen Spiegels 28 kann natürlich auch ein Spiegelsystem mit mehreren Spiegeln vorgesehen sein.

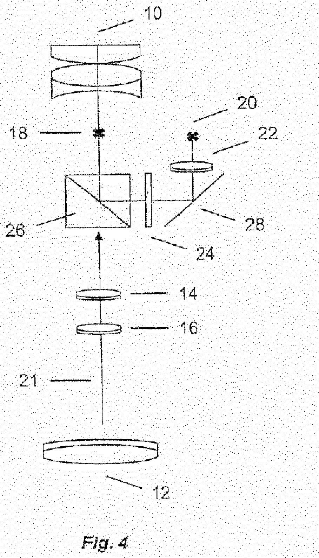

Das Ausführungsbeispiel von Fig. 4 unterscheidet sich von demjenigen von Fig. 3 dadurch, daß hier das Abbild 18 des Absehens 20 in die zweite Bildebene projiziert ist.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Zielfernrohr mit einem in einem im wesentlichen langgestreckten, vorzugsweise kreisrunden Querschnitt aufweisenden, an eine Handfeuerwaffe oder dergleichen anbringbaren Außenrohr integrierten optischen Linsensystem, welches an einem dem Auge des Schützen im Gebrauch der Waffe zugewandten Stirnende durch ein Okular und an seinem gegenüberliegenden Stirnende durch ein Objektiv abgeschlossen ist und zwischen dem Okular und dem Objektiv mindestens eine im optischen Strahlengang von das Okular und das Objektiv durchsetzenden Lichtstrahlen liegende Bildebene aufweist, wobei in der bzw. mindestens einer der Bildebenen eine im Strahlengang liegende Absehensstruktur angeordnet ist, **dadurch gekennzeichnet, daß** die Absehensstruktur aus einem in die (jeweilige) Bildebene projizierten virtuellen Abbild (18) eines außerhalb des Strahlengangs angeordneten Absehens (20) besteht, wobei der (jeweiligen) Bildebene ein Strahlenteiler (26) zugeordnet ist, auf den von einer mindestens ein Absehen (20) und eine Projektionseinrichtung (22) aufweisenden Displayeinheit (22, 28) das Abbild (18) des (jeweiligen) Absehens (20) projizierbar ist, und daß die Displayeinheit (22, 28) eine Variationseinrichtung mit einen elektronischen Rechner zum Verändern des auf den Strahlenteiler (26) projizierten Absehensabbilds (20) aufweist, wobei mit dem Rechner ein Winkelmessgerät gekoppelt ist, sodass das für den Schützen im Zielfernrohr erkennbare Absehensabbild (18) in Bezug auf das Ziel bei Schüssen nach oben oder unten durch den Rechner korrigierbar ist.

2. Zielfernrohr nach Anspruch 1, **dadurch gekennzeichnet, daß** der Strahlenteiler (26) von den das Okular (10) und das Objektiv (12) durchsetzenden Lichtstrahlen durchsetzt ist und die Displayeinheit (22, 28) außerhalb des Außenrohres angeordnet ist.

3. Zielfernrohr nach Anspruch 2, **dadurch gekennzeichnet, daß** das Außenrohr im Strahlengang zwischen der Displayeinheit (20, 28) und dem Strahlenteiler (26) eine durch ein lichtdurchlässiges, staub- und wasserdichtes Fenster (24) verschlossene Projektionsöffnung aufweist.

4. Zielfernrohr nach Anspruch 2 oder 3, **dadurch gekennzeichnet, daß** der Strahlenteiler (26) ein optisch halbdurchlässiges Prisma aufweist.

5. Zielfernrohr nach einem der Ansprüche 2 bis 4, **dadurch gekennzeichnet, daß** die Displayeinheit (22, 28) einen Speicher mit einer Vielzahl von Absehen (20) sowie eine Auswahleinrichtung zum wahlweisen Projizieren mindestens eines der Absehen (20) auf den/die Strahlenteiler (26) aufweist.

6. Zielfernrohr nach Anspruch 5, **dadurch gekennzeichnet, daß** die Auswahleinrichtung und/oder der Speicher elektronisch ausgebildet ist/sind.

7. Zielfernrohr nach einem der vorhergehenden Ansprüche, **dadurch gekennzeichnet, daß** die Variationseinrichtung elektronisch ausgebildet ist.

8. Zielfernrohr. nach einem der vorhergehenden Ansprüche, **dadurch gekennzeichnet, daß** die Variationseinrichtung zur Nullpunktjustierung des Zielfernrohres eingerichtet ist.

9. Zielfernrohr nach Anspruch 7 oder 8, **dadurch gekennzeichnet, daß** die Variationseinrichtung einen elektronischen Absehensspeicher und ein hochauflösendes Graphikmodul aufweist.

10. Zielfernrohr nach einem der vorhergehenden Ansprüche, **dadurch gekennzeichnet, daß** die Variationseinrichtung mittels einer am Zielfernrohr oder an der Waffe angeordneten Tasteneinrichtung direkt oder über Fernbedienung betätigbar ist.

11. Zielfernrohr nach Anspruch 10, **dadurch gekennzeichnet, daß** in die Variationseinrichtung beim Einschießen mittels der Tasteneinrichtung die Ballistik eines aus der Waffe zu verschießenden Geschosses bestimmende Werte, wie Munitionsparameter, eingebbar sind.

12. Zielfernrohr nach einem der vorhergehenden Ansprüche, **dadurch gekennzeichnet, daß** mit der Variationseinrichtung ein Zielentfernungsmesser gekoppelt ist.

13. Zielfernrohr nach einem der vorhergehenden Ansprüche, **dadurch gekennzeichnet, daß** der Rechner der Variationseinrichtung mit einer am Zielfernrohr befindlichen Einrichtung zur Parallaxenkorrektur gekoppelt ist.

14. Zielfernrohr nach einem der vorhergehenden Ansprüche, **dadurch gekennzeichnet, daß** der Rechner der Variationseinrichtung mit einem Luftdruckmesser gekoppelt ist.

15. Zielfernrohr nach einem der vorhergehenden Ansprüche, **dadurch gekennzeichnet, daß** das Winkelmessgerät im wesentlichen sämtliche Neigungsbewegungen des Zielfernrohrs registriert und seine Daten an den Rechner liefert.

16. Zielfernrohr nach Anspruch 15, **dadurch gekennzeichnet, daß** seitliche Neigungsbewegungen der aus Waffe und Zielfernrohr bestehenden Einheit dem Schützen über die Displayeinrichtung (22, 28) unter Angabe der Korrektionsrichtung anzeigbar sind.

17. Zielfernrohr nach Anspruch 15 oder 16, **dadurch gekennzeichnet, daß** das Absehensabbild (18) in Bezug auf die durch Seitenneigung verursachte Abweichung der Geschossflugbahn direkt über den Rechner korrigierbar ist.
